# EUROPEAN PATENT APPLICATION

(11) **EP 2 393 194 A1**
(43) Date of publication of application: **07.12.2011**
(21) Application number: 10790865.9
(22) Date of filing: 26.10.2010
(51) Int. Cl.: H02M 3/335

(54) **DEVICE, METHOD OF VOLTAGE CONVERSION AND POWER SUPPLY SYSTEM**

(30) Priority: 01.04.2010 CN 201010142326
(71) Applicant: Huawei Technologies Co., Ltd., Guangdong 518129 (CN)
(72) Inventor: Fan, Xiaodong, Guangdong 518129 (CN); JING, Xiaming, Guangdong 518129 (CN); LIU, Zhihua, Guangdong 518129 (CN); LIU, Xujun, Guangdong 518129 (CN)
(74) Representative: Barth, Stephan Manuel
(86) International application number: PCT/CN2010/078125
(87) International publication number: WO 2011/120299

(57) **Abstract**

A voltage transforming device is provided, which includes: a first voltage transforming module, configured to perform a pre-stage voltage transformation on an input direct current (DC) voltage to output an isolated DC voltage, in which the pre-stage voltage transformation includes a primary transformation that converts the input DC voltage to a to-be-transformed alternating current (AC) voltage, a working period of the primary transformation includes a first half period and a second half period, and a dead time exists when a first half period and a second half period are switched between each other; a capacitor filtering module, configured to perform capacitor filtering compensation on the isolated DC voltage in the dead time to output a stable intermediate DC voltage; and a second voltage transforming module, configured to perform at least two separate post-stage voltage transformations on the intermediate DC voltage to output DC voltages required by at least two loads. A voltage transforming method and a power supply system are also provided. Thereby, the decoupling of the pre-stage and post-stage working modes is achieved, and the interference caused by voltage transformation is reduced.

## Description

### FIELD OF THE INVENTION

The present invention relates to the field of power supply, and in particular, to a voltage transforming device, a voltage transforming method, and a power supply system.

### BACKGROUD OF THE INVENTION

The multi-output voltage regulating technology has power consumption gain and improves the power supply efficiency in the situation that a dual radio frequency module has unequal power configurations. With the emergence of successful cases about the multiple services routers (MSR) multiple mode protocol and radio access network (RAN) sharing, there is a requirement for a technology of voltage regulation of a circuit with a dual or multi-power supply. The existing single output power supply cannot meet the requirement. The intermediate frequency power supply is not reliable when the single output power supply is used. Once the power supply has faults, the whole module cannot work normally. The combining part of the multi-output architecture can supply the intermediate frequency part with electric power. In this case, if the single output is abnormal, the radio frequency module can still work normally.

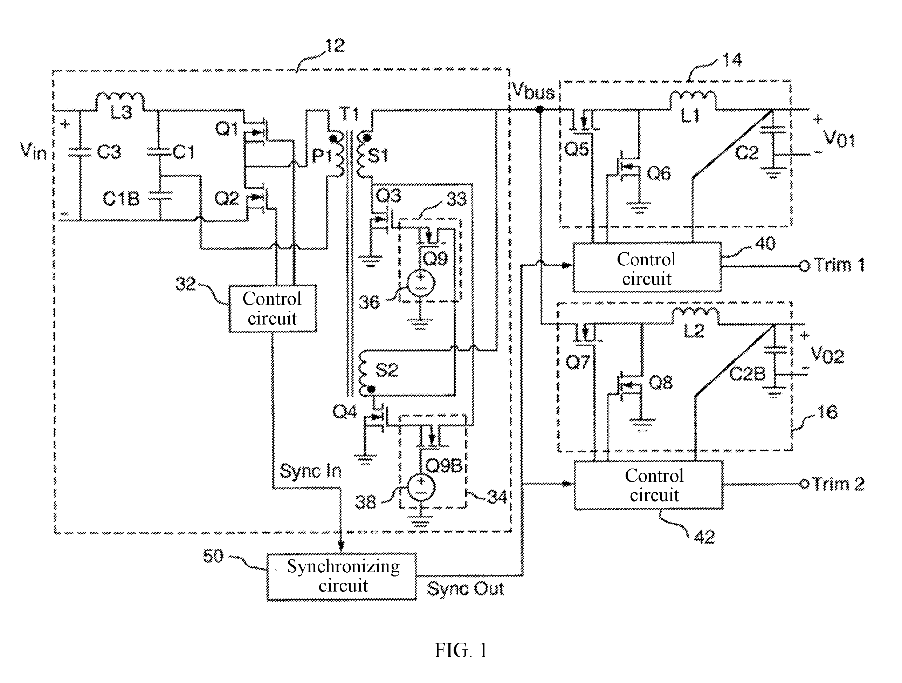

A multi-output circuit in the prior art is shown in FIG. 1. In the circuit, a half bridge circuit with a fixed duty cycle is located in a dashed line box 12, and two buck conversion circuits, adopting the synchronous tailing edge modulation, are located in dashed line boxes 14 and 16. In this solution, a synchronizing signal is required to control the pre-stage work and the post-stage work. For example, a synchronizing circuit 50 in FIG. 1 generates the synchronizing signal which is synchronous with a pre-stage control circuit 32 to control post-stage control circuits 40 and 42 to be synchronous with the pre-stage control circuit 32, which requires a synchronous square wave voltage.

The multi-output circuit in the prior art requires the synchronizing signal to work normally when the voltage is transformed and is easy to be interfered.

### SUMMARY OF THE INVENTION

The present invention provides a voltage transforming device, a voltage transforming method, and a power supply system, to reduce the interference suffered during voltage transformation.

An embodiment of the present invention provides a voltage transforming device, where the device includes:
a first voltage transforming module, configured to perform a pre-stage voltage transformation on an input direct current (DC) voltage to output an isolated DC voltage, in which the pre-stage voltage transformation includes a primary transformation that converts the input DC voltage to a to-be-transformed alternating current (AC) voltage, a working period of the primary transformation includes a first half period and a second half period, and a dead time exists when a first half period and a second half period are switched between each other;
a capacitor filtering module, configured to perform capacitor filtering compensation on the isolated DC voltage in the dead time to output a stable intermediate DC voltage; and
a second voltage transforming module, configured to perform at least two separate post-stage voltage transformations on the intermediate DC voltage to output DC voltages required by at least two loads.

An embodiment of the present invention provides a voltage transforming method, where the method includes:
performing a pre-stage voltage transformation on an input DC voltage to output an isolated DC voltage, in which the pre-stage voltage transformation includes a primary transformation that converts the input DC voltage to a to-be-transformed AC voltage, a working period of the primary transformation includes a first half period and a second half period, and a dead time exists when a first half period and a second half period are switched between each other;
performing filtering compensation on the isolated DC voltage in the dead time to output a stable intermediate DC voltage; and
performing at least two separate post-stage voltage transformations on the intermediate DC voltage to output DC voltages required by at least two loads.

An embodiment of the present invention provides a power supply system, where the system includes at least two loads and further includes a voltage transforming device for supplying the at least two loads with electric power.

The voltage transforming device is configured to: perform a pre-stage voltage transformation on an input DC voltage to output an isolated DC voltage, in which the pre-stage voltage transformation includes a primary transformation that converts the input DC voltage to a to-be-transformed AC voltage, a working period of the primary transformation includes a first half period and a second half period, and a dead time exists when a first half period and a second half period are switched between each other; perform capacitor filtering compensation on the isolated DC voltage in the dead time to output a stable intermediate DC voltage; and perform at least two separate post-stage voltage transformations on the intermediate DC voltage to output DC voltages required by at least two loads.

According to the above technical solutions of the embodiments of the present invention, in the dead time of the primary transformation during the pre-stage voltage transformation procedure, the capacitor filtering compensation is directly performed through a filter capacitor on the isolated DC voltage output after the pre-stage voltage transformation, to obtain the stable intermediate DC voltage as a post-stage input voltage, so that the post-stage does not need to be synchronous with the pre-stage to realize multi-outputs, the decoupling of the pre-stage and post-stage working modes is achieved, and the interference suffered during the voltage transformation is reduced.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a structural view of a multi-output circuit in the prior art;
FIG. 2 is a flow chart of a voltage transforming method according to an embodiment of the present invention;
FIG. 3 is a flow chart of a voltage transforming method according to an embodiment of the present invention;
FIG. 4 is a structural view of a voltage transforming device according to an embodiment of the present invention;
FIG. 5 is a structural view of a voltage transforming module according to an embodiment of the present invention;
FIG. 6 is a structural view of a voltage transforming device according to an embodiment of the present invention;
FIG. 7 is a structural view of a voltage transforming device according to an embodiment of the present invention;
FIG. 8 is a driving timing diagram according to an embodiment of the present invention;
FIG. 9 is a driving timing diagram according to an embodiment of the present invention; and
FIG. 10 is a structural view of a power supply system according to an embodiment of the present invention.

### DETAILED DESCRIPTION OF THE EMBODIMENTS

The technical solution of the embodiments of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

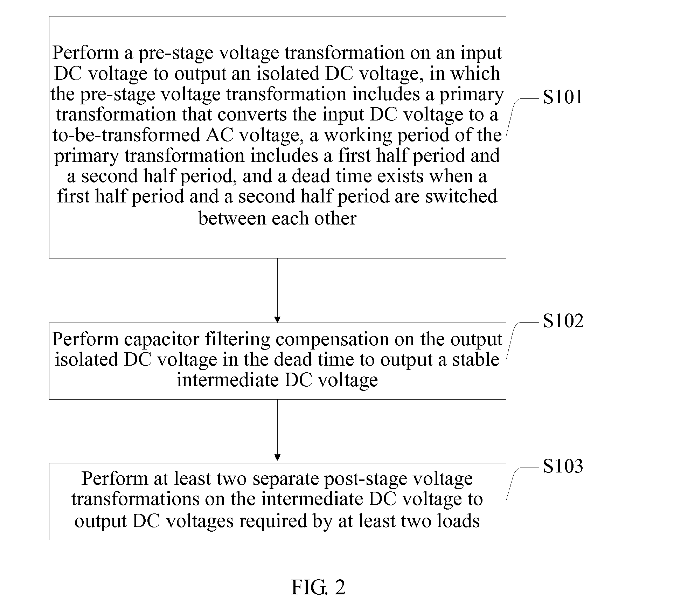

As shown in FIG. 2, the embodiments of the present invention provides a voltage transforming method, which includes the following steps.

In S101, a pre-stage voltage transformation is performed on an input DC voltage to output an isolated DC voltage. The pre-stage voltage transformation includes a primary transformation that converts the input DC voltage to a to-be-transformed AC voltage. A working period of the primary transformation includes a first half period and a second half period. A dead time exists when a first half period and a second half period are switched between each other.

In an embodiment, switching between a first half period and a second half period may be in one working period, the first half period is switched to the second half period. In another embodiment, switching between a first half period and a second half period may also be the second half period of a working period is switched to the first half period of another working period. The embodiments of the present invention do not limit herein.

In S102, capacitor filtering compensation is performed on the output isolated DC voltage in the dead time to output a stable intermediate DC voltage.

In an embodiment, after the isolated DC voltage is output in S101, the capacitor filtering that requires no inductor is directly performed on the isolated DC voltage, and the capacitor filtering compensation is performed on the isolated DC voltage to output the stable intermediate DC voltage.

In the dead time of the primary transformation, the filtering compensation performed through a filter capacitor may filter the voltage ripple caused by the primary transformation in the dead time and output the stable intermediate DC voltage. The voltage ripple may cause the jump of the output voltage when the first half period is switched to the second half period.

In an embodiment, the filter capacitor is charged in the working time (non-dead time) during the primary transformation. In the dead time of the primary transformation, the capacitor filtering compensation is performed on the isolated DC voltage by using the energy obtained from discharging, to filter the voltage ripple caused by the primary transformation in the dead time and output the stable intermediate DC voltage. The voltage ripple may cause the jump of the output voltage when the first half period is switched to the second half period.

In S103, at least two separate post-stage voltage transformations are performed on the intermediate DC voltage to output DC voltages required by at least two loads.

According to the above technical solution of the embodiments of the present invention, in the dead time of the primary transformation during the pre-stage voltage transformation procedure, the capacitor filtering compensation is directly performed through the filter capacitor on the isolated DC voltage output after the pre-stage voltage transformation, to obtain the stable intermediate DC voltage, so that the post-stage does not need to be synchronous with the pre-stage to realize multi-outputs, the decoupling of the pre-stage and post-stage working modes is achieved, and the interference suffered during the voltage transformation is reduced.

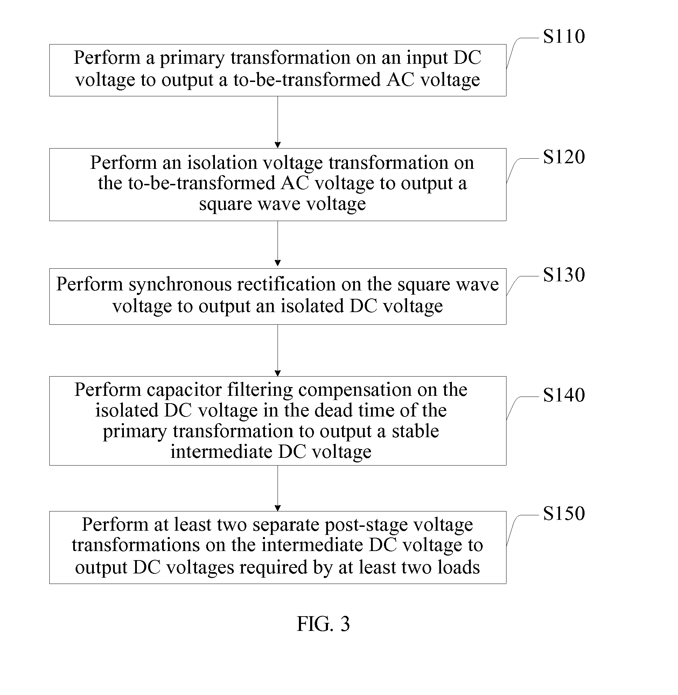

As shown in FIG. 3, the embodiments of the present invention provides a voltage transforming method, which includes the following steps.

In S110, a primary transformation is performed on an input DC voltage to output a to-be-transformed AC voltage. A working period of the primary transformation includes a first half period and a second half period. A dead time exists when a first half period and a second half period are switched between each other.

In an embodiment, switching between a first half period and a second half period may be in one working period, the first half period is switched to the second half period. In another embodiment, switching between a first half period and a second half period may also be the second half period of a working period is switched to the first half period of another working period. The embodiments of the present invention do not limit herein

In an embodiment, the dead time may cause the jump of the output voltage when the first half period is switched to the second half period.

In an embodiment, the primary transformation may be performed on the input DC voltage in a manner that a pre-stage pulse width modulation (PWM) signal with a fixed duty cycle drives a full bridge circuit formed of connected metal oxide semiconductor field effect transistors (MOSFETs). In an embodiment, the duty cycle of the pre-stage PWM control signal may be controlled to be close to 50% through voltage feed-forward frequency conversion, that is, the absolute value of the difference between the duty cycle of the pre-stage PWM signal and 50% is not zero and within a preset range. In actual application, the duty cycle of the pre-stage PWM signal may be controlled to 48%, 49%, or 51 %. The dead time can be shortened by controlling the duty cycle of the pre-stage PWM signal to be close to 50%.

In an embodiment, the primary transformation may be performed on the input DC voltage in a manner that the pre-stage PWM signal with the fixed duty cycle drives a half bridge circuit or push-pull circuit.

In S120, an isolation voltage transformation is performed on the to-be-transformed AC voltage to output a square wave voltage.

In an embodiment, the isolation voltage transformation may be performed on the to-be-transformed AC voltage through an isolating transformer to obtain a square wave voltage. The square wave voltage is an isolated AC voltage.

In S130, synchronous rectification is performed on the square wave voltage to filter the harmonic wave component and output an isolated DC voltage.

In an embodiment, the synchronous rectification is performed on the square wave voltage to filter the harmonic wave component and output the isolated DC voltage.

In S140, capacitor filtering compensation is performed on the output isolated DC voltage in the dead time to output a stable intermediate DC voltage.

In an embodiment, in the dead time of the primary full bridge circuit, the filtering compensation performed on the isolated DC voltage through a filter capacitor may provide some energy, to maintain the DC voltage output and output the stable intermediate DC voltage.

As mentioned in S110, in an embodiment, the duty cycle of the pre-stage PWM control signal can be controlled to be close to 50% through voltage feed-forward frequency conversion, that is, the absolute value of the difference between the duty cycle of the pre-stage PWM signal and 50% is not zero and within a preset range. In actual application, the duty cycle of the pre-stage PWM signal may be controlled to 48%, 49%, or 51 %. The dead time can be shortened by controlling the duty cycle of the pre-stage PWM signal to be close to 50%. Therefore, the filtering is performed on the isolated DC voltage output after the pre-stage primary rectification only through a filter capacitor with a very small capacitance value in no need of an additional filter inductor. For example, in an embodiment, the capacitance value of the filter capacitor is below 10 µf

In S150, at least two separate post-stage voltage transformations are performed on the intermediate DC voltage to output DC voltages required by at least two loads.

In an embodiment, a post-stage PWM signal that controls the post-stage voltage transformation can be dynamically adjusted according to the DC voltage output after the post-stage voltage transformation (for example, the duty cycle, phrase, or frequency of the post-stage PWM signal can be dynamically adjusted according to the output voltage) to achieve the interleaving control of the two separate post-stage voltage transformations.

According to the above technical solution in the embodiments of the present invention, in the dead time of the primary transformation during the pre-stage voltage transformation procedure, the capacitor filtering compensation is directly performed through the filter capacitor on the isolated DC voltage output after the pre-stage voltage transformation, to obtain the stable intermediate DC voltage, so that the post-stage does not need to be synchronous with the pre-stage to realize multi-outputs, the decoupling of the pre-stage and post-stage working modes is achieved, and the interference suffered during the voltage transformation is reduced. Further, the dead time is shortened in a manner that the pre-stage PWM signal with the fixed duty cycle controls the duty cycle of the pre-stage primary transformation to be close to 50%. Therefore, the filtering is performed on the isolated DC voltage output after the pre-stage primary rectification only through a filter capacitor with a very small capacitance value in no need of an additional filter inductor, thus reducing the circuit space.

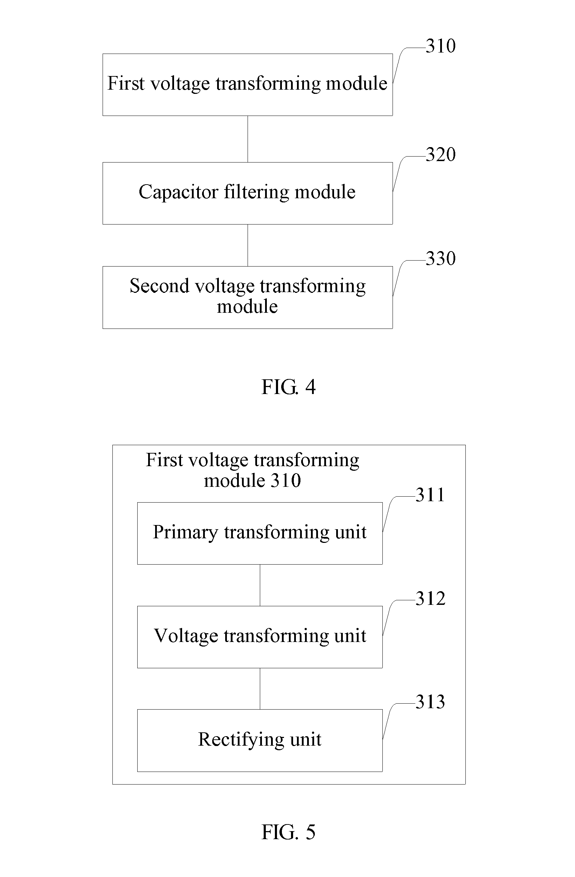

As shown in FIG. 4, the embodiments of the present invention provides a voltage transforming device, which includes a first voltage transforming module 310, a capacitor filtering module 320, and a second voltage transforming module 330.

The first voltage transforming module 310 is configured to perform a pre-stage voltage transformation on an input DC voltage to output an isolated DC voltage. The pre-stage voltage transformation includes a primary transformation that converts the input DC voltage to a to-be-transformed AC voltage. A working period of the primary transformation includes a first half period and a second half period. A dead time exists when a first half period and a second half period are switched between each other.

In an embodiment, switching between a first half period and a second half period may be in one working period, the first half period is switched to the second half period. In another embodiment, switching between a first half period and a second half period may also be the second half period of a working period is switched to the first half period of another working period. The embodiments of the present invention do not limit herein.

The capacitor filtering module 320 is configured to perform capacitor filtering compensation on the isolated DC voltage in the dead time to output a stable intermediate DC voltage.

In an embodiment, in the dead time of the primary full bridge circuit, the filtering compensation through the capacitor filtering module 320 may provide some energy, to maintain the DC voltage output and output the stable intermediate DC voltage.

The second voltage transforming module 330 is configured to perform at least two separate post-stage voltage transformations on the intermediate DC voltage to output DC voltages required by at least two loads.

In an embodiment, the second voltage transforming module 330 may include at least two voltage transforming circuits.

In this embodiment, any one of the at least two voltage transforming circuits is generally a buck conversion circuit, and may also be a boost conversion circuit in some cases. However, as the buck conversion circuit has small ripples and is easy to control, and therefore, is widely applied. In this embodiment, the buck conversion circuit is taken as an example for illustration.

According to the above technical solution of the embodiments of the present invention, in the dead time of the primary transformation during the pre-stage voltage transformation procedure, the capacitor filtering compensation is directly performed through the filter capacitor on the isolated DC voltage output after the pre-stage voltage transformation, to obtain the stable intermediate DC voltage, so that the post-stage does not need to be synchronous with the pre-stage to realize multi-outputs, the decoupling of the pre-stage and post-stage working modes is achieved, and the interference suffered during the voltage transformation is reduced.

As shown in FIG. 5, in an embodiment, the first voltage transforming module 310 may include a primary transforming unit 311, a voltage transforming unit 312, and a rectifying unit 313.

The primary transforming unit 311 is configured to perform the primary transformation on the input DC voltage to output the to-be-transformed AC voltage. A working period of the primary transforming unit includes a first half period and a second half period. A dead time exists when a first half period and a second half period are switched between each other.

In an embodiment, the primary transforming unit 311 may be a full bridge circuit. In an embodiment, the pre-stage primary rectification is performed on the input DC voltage in a manner that a pre-stage PWM signal with a fixed duty cycle controls the full bridge circuit. In an embodiment, the duty cycle of the pre-stage PWM control signal can be controlled to be close to 50% through voltage feed-forward frequency conversion. In actual application, the duty cycle of the PWM control signal may be controlled to 48%, 49%, or 51 %. The dead time can be shortened by controlling the duty cycle of the pre-stage PWM signal to be close to 50%, that is, in this time, the duty cycle in which the first voltage transforming module 310 works is controlled to be close to 50%. Accordingly, the capacitor filtering module 320 is formed of a filter capacitor with a small capacitance value. For example, in an embodiment, the capacitance value of the filter capacitor is below 10 µf.

In an embodiment, the primary transforming unit 311 may also be a half bridge circuit. In an embodiment, the primary transforming unit 311 may also be a push-pull circuit. In an embodiment, the pre-stage primary rectification may be performed on the input DC voltage in a manner that the pre-stage PWM signal with the fixed duty cycle controls the half bridge circuit or push-pull circuit. In an embodiment, the duty cycle of the pre-stage PWM control signal can be controlled to be close to 50% through voltage feed-forward frequency conversion. In actual application, the duty cycle of the PWM control signal may be controlled to 48%, 49%, or 51%. The dead time can be shortened by controlling the duty cycle of the pre-stage PWM signal to be close to 50%. Accordingly, the capacitor filtering module 320 is formed of a filter capacitor with a small capacitance value. For example, in an embodiment, the capacitance value of the filter capacitor is below 10 µf.

It should be noted that, the first half period and the second half period of the primary transforming unit refer to the first half period and the second half period of the working period of the full bridge circuit, the half bridge circuit, or the push-pull circuit. A dead time exists when a first half period and a second half period are switched between each other.

The voltage transforming unit 312 is configured to perform an isolation voltage transformation on the to-be-transformed AC voltage to output a square wave voltage. The square wave voltage is an isolated AC voltage.

In an embodiment, the voltage transforming unit 312 may be an isolating transformer.

The rectifying unit 313 is configured to perform synchronous rectification on the square wave voltage to filter the harmonic wave component and output an isolated DC voltage.

In an embodiment, the synchronous rectification is performed on the square wave voltage (that is, the isolated AC voltage) to filter the harmonic wave component and output the isolated DC voltage.

According to the above technical solution of the embodiments of the present invention, in the dead time of the primary transformation during the pre-stage voltage transformation procedure, the capacitor filtering compensation is directly performed through the filter capacitor on the isolated DC voltage output after the pre-stage voltage transformation, to obtain the stable intermediate DC voltage, so that the post-stage does not need to be synchronous with the pre-stage to realize multi-outputs, the decoupling of the pre-stage and post-stage working modes is achieved, and the interference suffered during the voltage transformation is reduced. Further, the dead time is shortened in a manner that the pre-stage PWM signal with the fixed duty cycle controls the duty cycle of the pre-stage primary transformation to be close to 50%. Therefore, the filtering is performed on the isolated DC voltage output after the pre-stage primary rectification only through a filter capacitor with a very small capacitance value in no need of an additional filter inductor, thus reducing the circuit space.

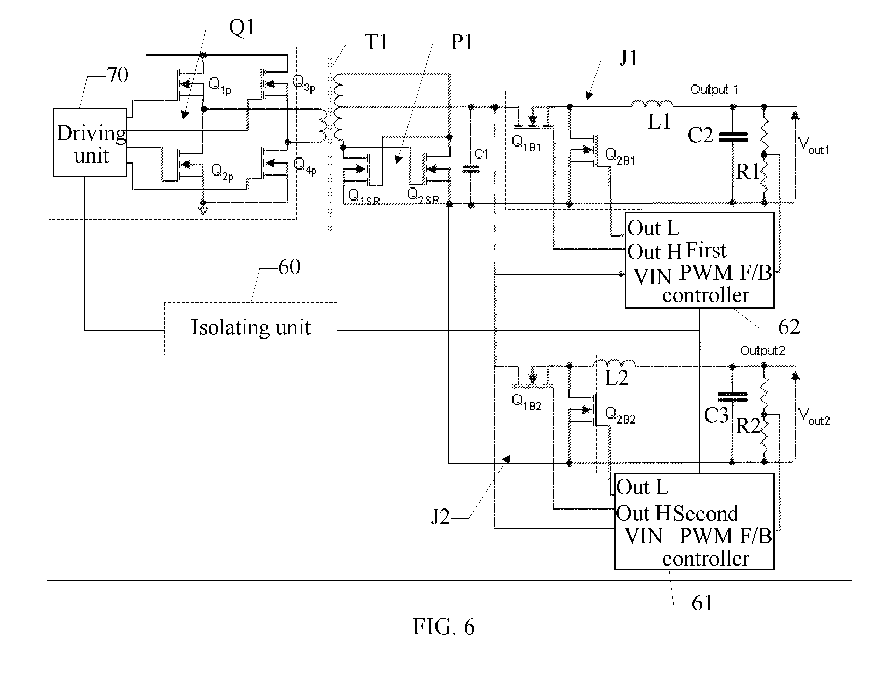

As shown in FIG. 6, the embodiments of the present invention provides a voltage transforming device, which includes a transformer T1, a full bridge circuit Q1, a rectifying circuit P1, a filter capacitor C1, and two separate buck conversion circuits J1 and J2.

Referring to FIG. 6, the full bridge circuit Q1 at the input side (the primary side) of the transformer T1 is formed of the following four connected MOSFETs: Q1p, Q2p, Q3p, and Q4p. Q2p and Q3p are a pair of bridge arms that are turned on simultaneously; Q1p and Q4p are another pair of bridge arms that are turned on simultaneously. The full bridge circuit Q1 performs the primary transformation on an input DC voltage to output a to-be-transformed AC voltage. In an embodiment, the primary side of the full bridge circuit Q1 performs the switch conversion on the input DC voltage to convert the input DC voltage to an AC voltage, that is, the to-be-transformed AC voltage. It should be noted that, a working period of the full bridge circuit Q1 includes a first half period and a second half period. In the first half period, Q1p and Q4p are turned on. In the second half period, Q2p and Q3p are turned on. The input DC voltage can be transformed to the to-be-transformed AC voltage after the first half period and the second half period. It should be noted that, a dead time exists when a first half period and a second half period are switched between each other, that is, in one working period, the first half period is not immediately switched to the second half period, but interrupted by a dead time. In the dead time, the MOSFETs of the full bridge circuit are not turned on. Alternatively, in another embodiment, the second half period of a working period is not immediately switched to the first half period of another working period, but interrupted by a dead time. In the dead time, the MOSFETs of the full bridge circuit are not turned on.

The transformer T1 performs an isolation voltage transformation on the to-be-transformed AC voltage output by the full bridge circuit Q1 to output a square wave voltage. The square wave voltage is an isolated AC voltage. In an embodiment, the transformer T1 is an isolating transformer.

The rectifying circuit P1 performs the synchronous rectification on the square wave voltage output by the transformer T1 to filter high frequency ripples (that is, the harmonic wave component) and output an isolated DC voltage. In FIG. 6, the rectifying circuit P1 is formed of the following two connected full bridge synchronous rectifiers: a first synchronous rectifier Q1SR and a second synchronous rectifier Q2SR. In an embodiment, the first synchronous rectifier Q1SR and the second synchronous rectifier Q2SR may be MOSFETs. In this embodiment, a gate of Q1SR is connected to a drain of Q2SR, forming a self-driving rectifying circuit. A synchronous rectification driving signal is generated by the winding of the transformer T1. As a gate of Q2SR is connected to a drain of Q1SR (that is, an output terminal of the transformer T1), in this embodiment, a self-driving timing is synchronous with the signal output by the transformer T1. Q2SR uses similar self-driving connection (the gate of Q1SR is connected to the drain of Q2SR). Definitely, it can be understood that, in another embodiment, Q1SR and Q2SR may also use other driving modes, and the driving timing in the other driving modes should be consistent with the self-driving timing.

The rectifying circuit P1 outputs an isolated DC voltage after performing the synchronous rectification on the square wave voltage (that is, the isolated AC voltage). In an embodiment, the rectifying circuit P1 performs the synchronous rectification on the square wave voltage (that is, the isolated AC voltage) to filter the harmonic wave component and output the isolated DC voltage.

The filter capacitor C1 directly performs the filtering on the isolated DC voltage to output the stable intermediate DC voltage.

In FIG. 6, the square wave voltage output by the transformer T1 is synchronously rectified and then directly input into the filter capacitor C1. The filter capacitor C1 performs the filtering compensation on the isolated DC voltage to maintain the direct output and output the intermediate DC voltage.

In the dead time of the primary full bridge circuit, the MOSEFTs of the full bridge circuit are not turned on. In this case, an output jump exists in the full bridge circuit, that is, a jump occurs between the output voltage in the first half period and the output voltage in the second half period. Thus, the post-stage buck conversion circuits J1 and J2 do not obtain enough stable input voltages. In this embodiment, the filtering compensation through the filter capacitor C1 can provide some energy to maintain the DC voltage output and output the stable intermediate DC voltage. In the dead time of the primary full bridge circuit, the filtering compensation through a filter capacitor can filter the voltage ripple caused by the primary full bridge circuit in the dead time to output the stable intermediate DC voltage. The voltage ripple may cause the jump of the output voltage when a first half period and a second half period are switched between each other.

In this embodiment, the filter capacitor C1 is charged in a non-dead time (for example, the first half period or the second half period) with the voltage output by the rectifying circuit P1. In the dead time of the full bridge circuit Q1, the jump of the voltage output by the rectifying circuit P1 (the isolated DC voltage) occurs. In this case, due to the unstable voltage (caused by the jump), the filter capacitor releases the energy absorbed by previous charging to perform the filtering compensation on the isolated DC voltage to output the stable intermediate DC voltage.

The intermediate DC voltage passes through the two separate buck conversion circuits (for example, the first buck conversion circuit J1 and the second buck conversion circuit J2) to output different DC voltages required by the two loads. In FIG. 6, the MOSFET Q1B1 and the MOSFET Q2B1 form a buck conversion circuit. An inductor L1 and a capacitor C2 are configured to filter the output of the buck conversion circuit. Similarly, the MOSFET Q1B2 and the MOSFET Q2B2 form another buck conversion circuit. An inductor L2 and a capacitor C2 are configured to filter the output of the buck conversion circuit.

Referring to FIG. 6, in an embodiment, the voltage transforming device also includes two PWM controllers: a first PWM controller 61 and a second PWM controller 62. Since two controlling loops are provided, each buck conversion circuit can separately adjust the output voltage and other protection functions. Referring to FIG. 6, the MOSFET Q1B1 and MOSFET Q2B1 are connected to pins OUT H and OUT L of the first PWM controller 61, respectively. The MOSFET Q1B1 and MOSFET Q2B1 are connected to pins OUT H and OUT L of the second PWM controller 62, respectively. A feedback input terminal (F/B terminal) of each PWM controller is also connected to the output terminal of each buck conversion circuit. For example, the F/B terminal of the first PWM controller 61 is connected to a divider resistor R1 at the output terminal of the first buck conversion circuit J1, and the F/B terminal of the second PWM controller 62 is connected to a divider resistor R2 at the output terminal of the second buck conversion circuit J2. As such, the PWM controllers can dynamically adjust the PWM signal that controls each buck conversion circuit according to the output voltage of each buck conversion circuit (for example, dynamically adjust the duty cycle, phrase, or frequency of the PWM signal according to the output voltage) to achieve the interleaving control of the buck conversion circuit. In an embodiment, the PWM signal that controls the buck conversion circuit may adopt the trailing edge modulation. In another embodiment, the PWM signal that controls the buck conversion circuit may also adopt the leading edge modulation.

The PWM controller may also generate a pre-stage PWM signal with a fixed duty cycle (for example, provide the pre-stage PWM signal with the fixed duty cycle which is close to 50%), and then drive the gates of the MOSFETs (Q1p, Q2p, Q3p, and Q4p) of the primary side to control each gate to be turned on through an isolating unit 60 and a driving unit 70, so that the primary full bridge circuit Q1 works in a fixed duty cycle (for example, the fixed duty cycle that is close to 50%). Definitely, it is easy to understand that, in an embodiment, the pre-stage PWM signal with the fixed duty cycle may be generated by a separate pulse signal generating unit, or together generated by the pre-stage PWM controller in this embodiment. In this embodiment, since the PWM controller is located at the secondary side, the isolating unit 60 is configured to deliver the generated pre-stage PWM signal with the fixed duty cycle to the primary side. The driving unit 70 is configured to amplify the pre-stage PWM signal with the fixed duty cycle delivered by the isolating unit 60. Definitely, in another embodiment, the voltage transforming device may not include the isolating unit 60.

Moreover, since the primary full bridge circuit works in the fixed duty cycle near 50%, the dead time is very short. As such, depending on the leakage inductance of the transformer T1 itself, the filtering compensation is performed on the isolated DC voltage only through the filter capacitor C1 with a very small capacitance value in no need of an additional filter inductor, thus reducing the circuit space. For example, in an embodiment, the capacitance value of the filter capacitor C1 is below 10 µf

As shown by the dashed line in FIG. 6, the PWM controller can be connected to an upper end of the filter capacitor C1 through an input voltage VIN terminal, measure an output voltage of the filter capacitor C1, and calculate a primary voltage of the transformer T1 based on the output voltage, so as to dynamically adjust the frequency of the pre-stage PWM signal, thus adjusting the working frequency of the primary full bridge, controlling the alternating magnetic flux of the transformer T1, further reducing the pre-stage magnetic core loss, and expanding the working range of the input voltage for the resonant topology with the pre-stage fixed duty cycle.

Definitely, it can be understood that, in another embodiment, the output voltage of the filter capacitor C1 may also be detected according to an auxiliary power supply or by other means, and then the primary voltage of the transformer T1 is calculated based on the output voltage. The primary voltage of the transformer T1 can dynamically adjust the frequency of the pre-stage PWM signal, so as to adjust the working frequency of the primary full bridge.

In an embodiment, the duty cycle of the pre-stage PWM signal may be close to 50%, that is, the absolute value of the difference between the duty cycle of the pre-stage PWM signal and 50% is not zero and within a preset range. In actual application, the duty cycle of the pre-stage PWM signal may be a fixed duty cycle of 49%, 48%, or 53%.

Definitely, it can be understood that, in an embodiment, the two PWM controllers may be integrated in one chip.

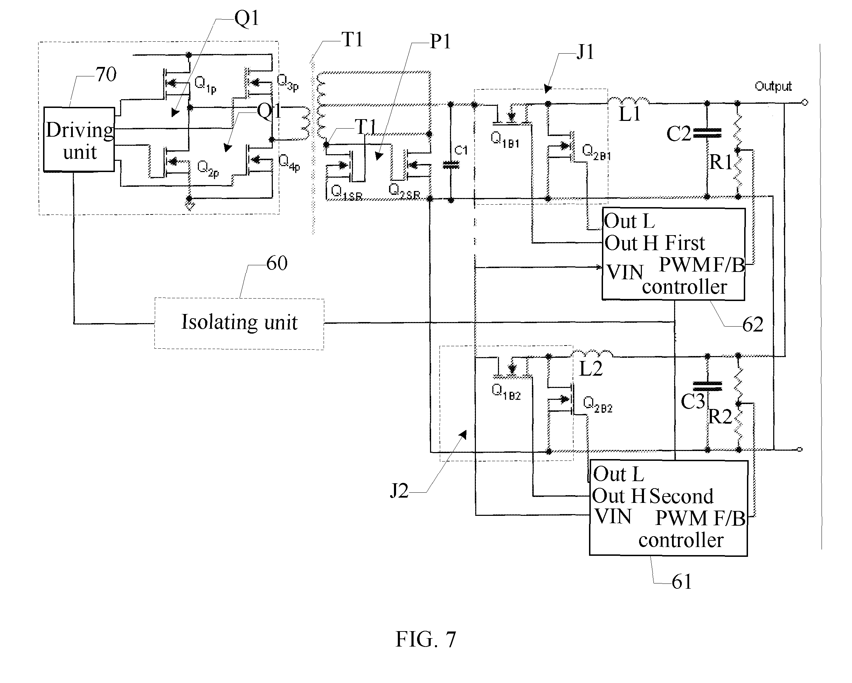

Furthermore, as shown in FIG. 7, in another embodiment, the two outputs in FIG. 6 may be connected in parallel. In the parallel working mode, respective filter inductors L1 and L2 for the two outputs can be coupling inductors. When the filter inductors L1 and L2 are connected in parallel, the two output voltages are the same.

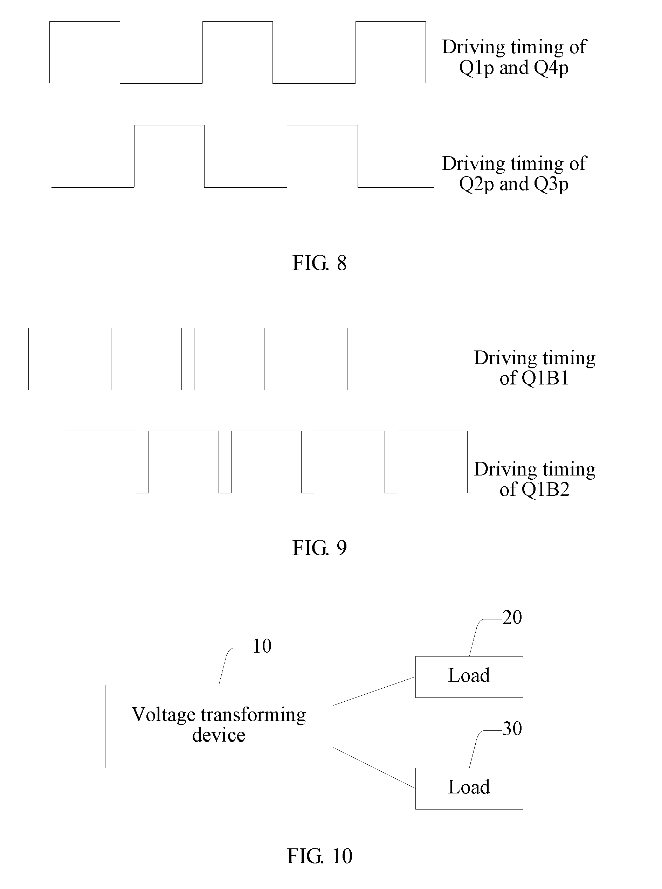

As shown in FIG. 8, this embodiment provides a driving timing diagram of Q1p to Q4p. Referring to FIG. 8, Q1p, Q2p, Q3p and Q4p in the primary full bridge rectifying circuit work in the fixed duty cycle of near 50% (the duty cycle is 49% in FIG. 8). In FIG. 8, Q1p and Q4p adopt the same driving timing, Q2p and Q3p adopt the same driving timing, and Q1p and Q3p are under complementary symmetrical control.

As shown in FIG. 9, this embodiment provides a driving timing diagram of Q1B1 and Q1B2. Referring to FIG. 9, the phrase shift between the driving timing of the upper MOSFETs Q1B1 and Q1B2 in the two buck conversion circuits is 180°, so that the two buck conversion circuits work alternately, thus reducing the current ripple reflected by the primary side input.

It can be understood that, in an embodiment, if three loads are provided, three buck conversion circuits are required to output different DC voltages required by the three loads. In this case, the PWM signal controls the phrase shift between the driving timing of the upper MOSFETs of the three buck conversion circuits to be 120°, so that the three buck conversion circuits can work alternately.

Definitely, it is easy to understand that the embodiments corresponding to FIG. 6 and FIG. 7 describe the situation in which two loads are provided. When multiple loads (for example, three or four loads) are provided, the technical solution is the same with that used in the case of two loads and has no essential change. The details will not be described herein again.

According to the above technical solution of the embodiments of the present invention, by means of the PWM controller, the primary full bridge circuit works in the fixed duty cycle near 50%, so the dead time is very short. As such, depending on the leakage inductance of the transformer T1, the filtering compensation is performed on the isolated DC voltage only through the filter capacitor C1 with a very small capacitance value in no need of an additional filter inductor, thus reducing the circuit space. In the dead time, the stable intermediate DC voltage is obtained by means of the output capacitor C1, so that the post-stage does not need to be synchronous with the pre-stage to realize multi-outputs and the decoupling of the pre-stage and post-stage working modes is achieved. Multiple PWM controllers can be used to achieve the working mode of the trailing edge modulation of the interleaved PWM. The PWM controller may also obtain a primary voltage VIN of the transformer T1 through the filter capacitor C1 or through an auxiliary power supply or by other means, and dynamically adjust the working frequency of the pre-stage primary full bridge based on the obtained input voltage VIN, thus controlling the alternating magnetic flux of the transformer T1, further reducing the pre-stage magnetic core loss, and expanding the working range of the input voltage for the resonant topology with the pre-stage fixed duty cycle.

As shown in FIG. 10, the embodiments of the present invention provides a power supply system, which includes a voltage transforming device 10 and at least two loads. For ease of illustration, FIG. 10 shows a structural view in which two loads (a load 20 and a load 30) are provided. When multiple loads are provided, the essence of the present invention may not be affected.

The voltage transforming device 10 is configured to perform a pre-stage voltage transformation on an input DC voltage to output an isolated DC voltage, in which the pre-stage voltage transformation includes a primary transformation that converts the input DC voltage to a to-be-transformed AC voltage, a working period of the primary transformation includes a first half period and a second half period, and a dead time exists when a first half period and a second half period are switched between each other; perform capacitor filtering compensation on the isolated DC voltage in the dead time to output a stable intermediate DC voltage; and perform at least two separate post-stage voltage transformations on the intermediate DC voltage to output DC voltages required by at least two loads (the load 20 and the load 30).

When multiple loads (for example, three or four loads) are provided, the technical solution is the same with that used in the case of two loads and has no essential change. The details will not be described herein again.

The structure and function of the voltage transforming device 10 may be the same as those described in any of the above embodiments, and the details will not be described herein again.

According to the above technical solution of the embodiments of the present invention, in the dead time of the primary transformation during the pre-stage voltage transformation procedure, the capacitor filtering compensation is directly performed through the filter capacitor on the isolated DC voltage output after the pre-stage voltage transformation, to obtain the stable intermediate DC voltage, so that the post-stage does not need to be synchronous with the pre-stage to realize multi-outputs, the decoupling of the pre-stage and post-stage working modes is achieved, and the interference suffered during the voltage transformation is reduced.

The above descriptions are merely embodiments of the present invention. Any modification or variation can be made by persons skilled in the art without departing from the scope of the present invention.

## Claims

1. A voltage transforming device, comprising:
a first voltage transforming module, configured to perform a pre-stage voltage transformation on an input direct current (DC) voltage to output an isolated DC voltage, wherein the pre-stage voltage transformation comprises a primary transformation that converts the input DC voltage to a to-be-transformed alternating current (AC) voltage, a working period of the primary transformation comprises a first half period and a second half period, and a dead time exists when a first half period and a second half period are switched between each other;
a capacitor filtering module, configured to perform capacitor filtering compensation on the isolated DC voltage in the dead time to output a stable intermediate DC voltage; and
a second voltage transforming module, configured to perform at least two separate post-stage voltage transformations on the intermediate DC voltage to output DC voltages required by at least two loads.

2. The voltage transforming device according to claim 1, wherein the first voltage transforming module comprises:
a primary transforming unit, configured to perform the primary transformation on the input DC voltage to output a to-be-transformed AC voltage;
a voltage transforming unit, configured to perform an isolation voltage transformation on the to-be-transformed AC voltage to output a square wave voltage, wherein the square wave voltage is an isolated AC voltage; and
a rectifying unit, configured to perform synchronous rectification on the square wave voltage to output an isolated DC voltage.

3. The voltage transforming device according to claim 2, wherein the primary transforming unit is one of a full bridge circuit, a half bridge circuit, or a push-pull circuit, and the first half period and the second half period in the primary transforming process refer to the first half period and the second half period of the working period of the full bridge circuit, the half bridge circuit, or the push-pull circuit.

4. The voltage transforming device according to claim 3, wherein the device also comprises a pulse width modulation (PWM) controller, the PWM controller is configured to generate a pre-stage PWM signal with a fixed duty cycle for driving the full bridge circuit, the half bridge circuit, or the push-pull circuit, the duty cycle of the pre-stage PWM control signal is controlled to be close to 50%, and the capacitor filtering module is formed of a filter capacitor with a small capacitance value.

5. The voltage transforming device according to claim 4, wherein the second voltage transforming module comprises at least two voltage transforming circuits, and any one of the at least two voltage transforming circuits is a buck conversion circuit.

6. The voltage transforming device according to claim 5, wherein the PWM controller is also configured to generate a post-stage PWM signal for driving the at least two voltage transforming circuits, and the PWM controller dynamically adjusts the post-stage PWM signal based on output voltages of the at least two voltage transforming circuits.

7. The voltage transforming device according to claim 2, wherein the rectifying unit comprises a first synchronous rectifier and a second synchronous rectifier, a gate of the first synchronous rectifier is connected to a drain of the second synchronous rectifier, and a gate of the second synchronous rectifier is connected to a drain of the first synchronous rectifier.

8. A voltage transforming method, comprising:
performing a pre-stage voltage transformation on an input direct current (DC) voltage to output an isolated DC voltage, wherein the pre-stage voltage transformation comprises a primary transformation that converts the input DC voltage to a to-be-transformed alternating current (AC) voltage, a working period of the primary transformation comprises a first half period and a second half period, and a dead time exists when a first half period and a second half period are switched between each other;
performing filtering compensation on the isolated DC voltage in the dead time to output a stable intermediate DC voltage; and
performing at least two separate post-stage voltage transformations on the intermediate DC voltage to output DC voltages required by at least two loads.

9. The voltage transforming method according to claim 8, wherein the performing the pre-stage voltage transformation on the input DC voltage to output the isolated DC voltage comprises:
performing the primary transformation on the input DC voltage to output a to-be-transformed AC voltage;
performing an isolation voltage transformation on the to-be-transformed AC voltage to output a square wave voltage, wherein the square wave voltage is an isolated AC voltage; and
performing synchronous rectification on the square wave voltage to output an isolated DC voltage.

10. The voltage transforming method according to claim 8 or 9, wherein a driving signal for the primary transformation is a pre-stage pulse width modulation (PWM) signal with a fixed duty cycle.

11. The voltage transforming method according to claim 8 or 9, wherein the performing the primary transformation on the input DC voltage is to convert a DC voltage to a to-be-transformed AC voltage through a full bridge circuit, a half bridge circuit, or a push-pull circuit, and the first half period and the second half period in the primary transforming process refer to the first half period and the second half period of the working period of the full bridge circuit, the half bridge circuit, or the push-pull circuit.

12. A power supply system, comprising at least two loads, and further comprising a voltage transforming device for supplying the at least two loads with electric power, wherein
the voltage transforming device is configured to perform a pre-stage voltage transformation on an input DC voltage to output an isolated DC voltage, wherein the pre-stage voltage transformation comprises a primary transformation that converts the input DC voltage to a to-be-transformed alternating current (AC) voltage, a working period of the primary transformation comprises a first half period and a second half period, and a dead time exists when a first half period and a second half period are switched between each other; perform capacitor filtering compensation on the isolated DC voltage in the dead time to output a stable intermediate DC voltage; and perform at least two separate post-stage voltage transformations on the intermediate DC voltage to output DC voltages required by at least two loads.

13. The power supply system according to claim 12, wherein the voltage transforming device comprises:
a first voltage transforming module, configured to perform the pre-stage voltage transformation on the input direct current (DC) voltage to output the isolated DC voltage, wherein the pre-stage voltage transformation comprises a primary transformation that converts the input DC voltage to the to-be-transformed AC voltage, a working period of the primary transformation comprises a first half period and a second half period, and a dead time exists when a first half period and a second half period are switched between each other;
a capacitor filtering module, configured to perform capacitor filtering compensation on the isolated DC voltage in the dead time to output a stable intermediate DC voltage; and
a second voltage transforming module, configured to perform at least two separate post-stage voltage transformations on the intermediate DC voltage to output DC voltages required by at least two loads.

14. The power supply system according to claim 12, wherein the duty cycle in which the first voltage transforming module works is controlled to be close to 50%, and the capacitor filtering module is formed of a filter capacitor with a small capacitance value.
